# EUROPEAN PATENT SPECIFICATION

(11) **EP 1 010 943 B1**
(45) Date of publication and mention of the grant of the patent: **07.09.2005**
(21) Application number: 99308595.0
(22) Date of filing: 29.10.1999
(51) Int. Cl.: F23N 5/08

(54) **Flame monitoring methods and apparatus**
Verfahren und Vorrichtung zur Flammenüberwachung
Procédé et dispositif de surveillance de flamme

(30) Priority: 16.12.1998 GB 9827719
(43) Date of publication of application: 21.06.2000
(73) Proprietor: Forney Corporation, Texas 75006 (US)
(72) Inventor: Forbes, Stewart, Reading, Berkshire RG6 5GX (GB); Powell, Brian, Maidenhead, Berkshire SL6 3UR (GB)
(74) Representative: Foster, David Martyn

(56) References cited:
- EP-A- 0 616 200
- EP-A- 0 802 372
- GB-A- 2 204 428
- US-A- 5 249 954

## Description

The invention relates to flame monitoring methods and apparatus. Flame monitoring apparatus embodying the invention, and to be described below by way of example only, may be used for monitoring a flame of burning hydrocarbon fuel such as in a boiler, furnace or other combustion equipment, in order to determine characteristics of the flame and, in particular, to provide information on the stoichiometry of the combustion process. In such an application, therefore, the apparatus can be used to improve combustion efficiency and reduce the production of pollutants.

A known system for monitoring a hydrocarbon flame, as disclosed in US patent No. 5249954, comprises a charge coupled device (CCD) array camera including an ultraviolet - visible image intensifier for sensing emission from CH species and/or OH species, and an infrared camera with band pass interference filters for sensing emission from, for example, CO species, CO₂ species and/or H₂O species. The CCD camera provides combustion information to allow control of the fuel air ratio.

Detection of emissions from the C₂, CH and/or OH species by a pair of photodiodes is also known from UK patent No. 2204428.

According to the invention, there is provided apparatus for monitoring a hydrocarbon flame, comprising first detecting means responsive to electromagnetic radiation emitted by the flame in a first wavelength corresponding to a transient species existing for only a short time within the combustion region of the flame to produce a first detection signal, second detecting means responsive to electromagnetic radiation emitted by the flame in a second wavelength corresponding to a non-transient species in the combustion region to produce a second detection signal, and first comparing means responsive to the first and second detection signals to produce a first comparison signal, and output means for producing an output signal dependent on the air/fuel ratio in the flame, the apparatus being characterised by third detecting means responsive to electromagnetic radiation emitted by the flame in a third wavelength which corresponds to a second non-transient species and is different from the wavelength corresponding to the first-mentioned non-transient species whereby to produce a third detection signal, and by second comparison means responsive to the third detection signal and to one of the first and second detection signals to produce a second comparison signal, the output means being operative to produce the output signal in dependence on the first and second comparison signals.

According to the invention, there is further provided a method for monitoring a hydrocarbon flame, comprising the steps of detecting electromagnetic radiation emitted by the flame in a first wavelength corresponding to a transient species existing for only a short time within the combustion region of the flame to produce a first detection signal, detecting electromagnetic radiation emitted by the flame in a second wavelength corresponding to a non-transient species in the combustion region to produce a second detection signal, comparing the first and second detection signals to produce a first comparison signal, and producing an output signal dependent on the air/fuel ratio in the flame, the method being characterised by the steps of detecting electromagnetic radiation emitted by the flame in a third wavelength which corresponds to a second non-transient species and is different from the wavelength corresponding to the first-mentioned non-transient species whereby to produce a third detection signal, comparing the third detection signal with one of the first and second detection signals to produce a second comparison signal, and producing the output signal in dependence on the first and second comparison signals.

Preferred embodiments of the invention are object of the dependent claims.

Flame monitoring methods and apparatus according to the invention will now be described, by way of example only, with reference to the accompanying diagrammatic drawings in which:
Figure 1 is a block diagram of one form of the apparatus; and
Figures 2 - 8 are graphs for explaining the operation of the apparatus of Figure 1.

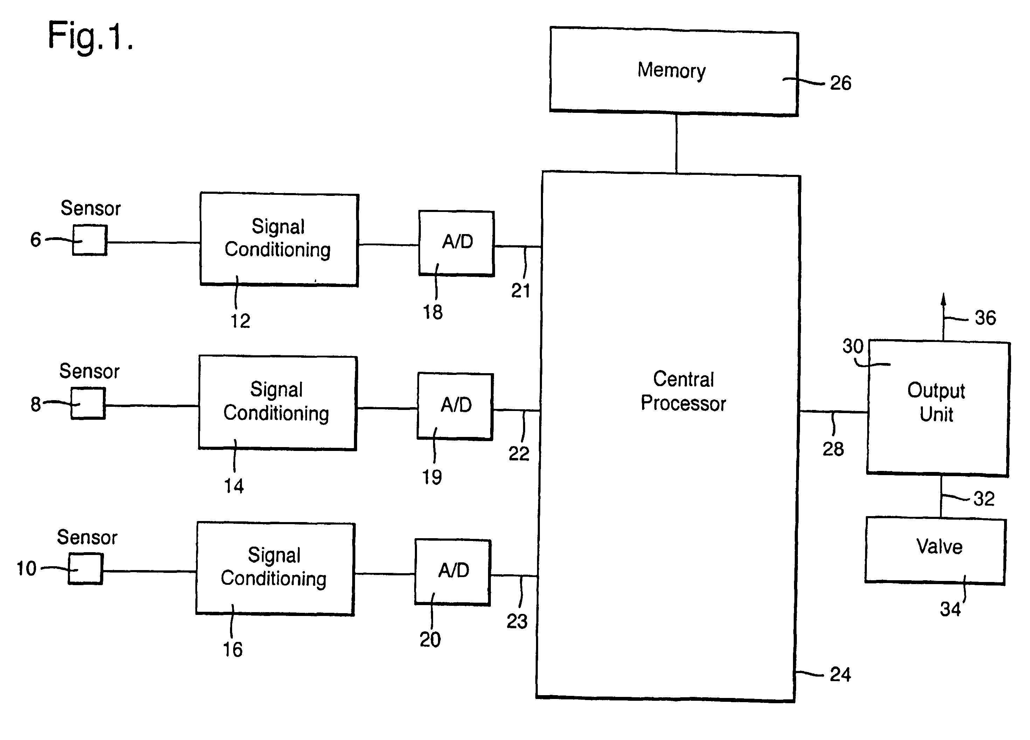

The apparatus shown in Figure 1 comprises a plurality of electromagnetic radiation sensors. As will be explained in more detail below, there are at least three sensors and possibly more. For ease of description, Figure 1 shows three sensors, 6, 8 and 10. Each of these sensors is fitted with a narrow band filter so that it is only responsive to a narrow range of wavelengths in a particular band. These wavelengths and bands will be discussed in more detail below. The sensors are mounted in or on the boiler, furnace or other combustion apparatus and positioned to view the flame of burning hydrocarbon fuel which is to be monitored. The signals from each of the sensors, dependent on the radiation sensed in the respective narrow range of wavelengths, are amplified and frequency-band limited by a respective one of signal conditioning units 12,14 and 16 and then passed to respective analogue to digital converters 18,19 and 20. The resultant digitised detection signals on lines 21,22 and 23 are passed to a central processing unit 24. A memory 26 is associated with the CPU 24. In a manner to be explained in detail below, the CPU processes the data and provides information on the stoichiometry of the combustion process. The resultant output on a line 28 is passed to an output unit 30. The unit 30 can produce an output on a line 32 which automatically controls a valve arrangement shown diagrammatically at 34 which in turn can adjust the fuel/air ratio in the furnace, so as to produce the desired air/fuel ratio. This may be adjusted to the stoichiometric ratio, to maximise efficiency, or to a predetermined amount of excess air in order to reduce pollutants.

In addition, the output unit 30 can produce an output on a line 36 for indicating the results of the flame monitoring process on a suitable display and/or for transmitting the information to a distant location.

In one advantageous form of the apparatus, which will now be described in more detail, sensor 6 is arranged to be responsive to radiation in a narrow wavelength band centred at 2.96µm, sensor 8 is arranged to be responsive to radiation in a narrow wavelength band centred at 3.35µm, and sensor 10 is arranged to be responsive to radiation in a narrow wavelength band centred at 3 10nm. In such an arrangement, sensors 6 and 8 can be lead selenide sensors, and sensor 10 can be a silicon sensor.

The operation of the apparatus will now be considered in more detail.

The emission spectrum of a hydrocarbon flame contains various emission peaks, examples of which are as follows:-
(a) a peak associated with the hot hydrocarbon fuel in the flame, such as centred at 3.35 µm;
(b) peaks associated with products of combustion in the flame - such as centred at 927 nm, 1.45 µm and 2.9 µm for H₂O, and 4.5µm for CO₂; and
(c) peaks associated with transient species that only exist for a short time within the combustion region, such as a peak corresponding to OH centred at about 310 nm, a peak associated with CH centred at about 431nm, and a peak associated with C₂ centred at about 517 nm.

It has been found in accordance with the invention that the frequency spectrum of emissions due to the transient species is significantly different from the frequency spectrum of the emissions due to the fuel and the products of combustion, and that these differences vary with the stoichiometry of the combustion process.

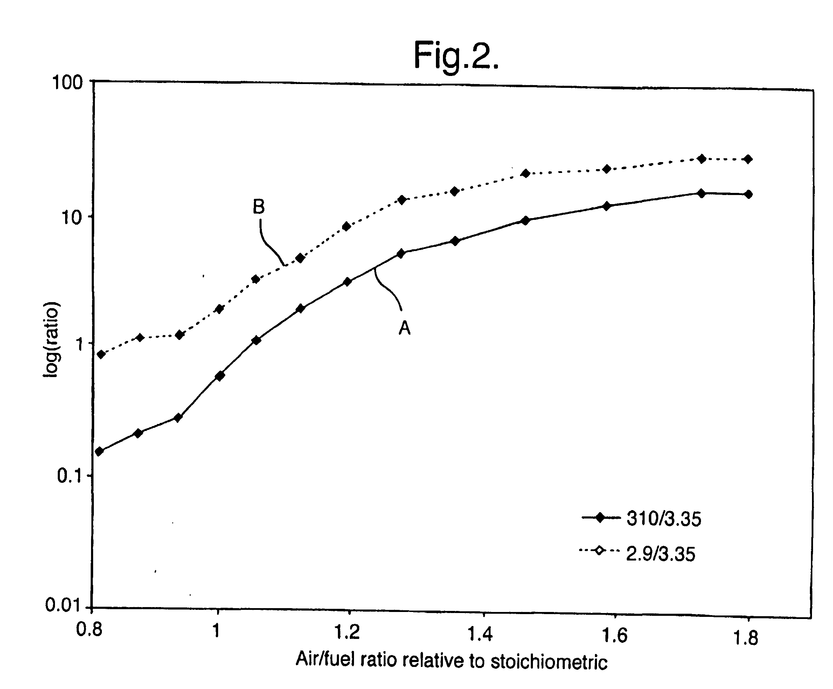

In Figure 2, the vertical axis is the ratio of the power in a particular frequency band between two of the digitised detection signals (lines 18,19 and 20), to a logarithmic scale, and the horizontal axis is the air/fuel ratio relative to the stoichiometric value (1). In Figure 2, curve A represents the ratio of the power in a particular frequency band in the detection signal from sensor 10 (at 310nm corresponding to the OH transient species) to the power in a particular frequency band in the detection signal from sensor 8 (at 3.35 µm corresponding to the emission from the hot hydrocarbon fuel). Curve B represents the ratio of the power in a particular frequency band in the detection signal from sensor 6 (at 2.9 µm, corresponding to H₂O) to the power in a particular frequency band in the detection signal from sensor 8 (at 3.35 µm corresponding to the hot hydrocarbon fuel). The curves in Figure 2 were measured in a gas-fired furnace at 100% load (maximum fuel input), and were measured over a 10-30 Hz frequency band.

Figure 2 clearly shows that curve A varies much more significantly with the air/fuel ratio than does curve B, particularly over the important region close to the stoichiometric air/fuel ratio. The curves thus show that the frequency spectrum of the emissions due to the transient species (OH in this case) is significantly different from the frequency spectrum of the fuel or product species emissions and that these differences vary with flame stoichiometry.

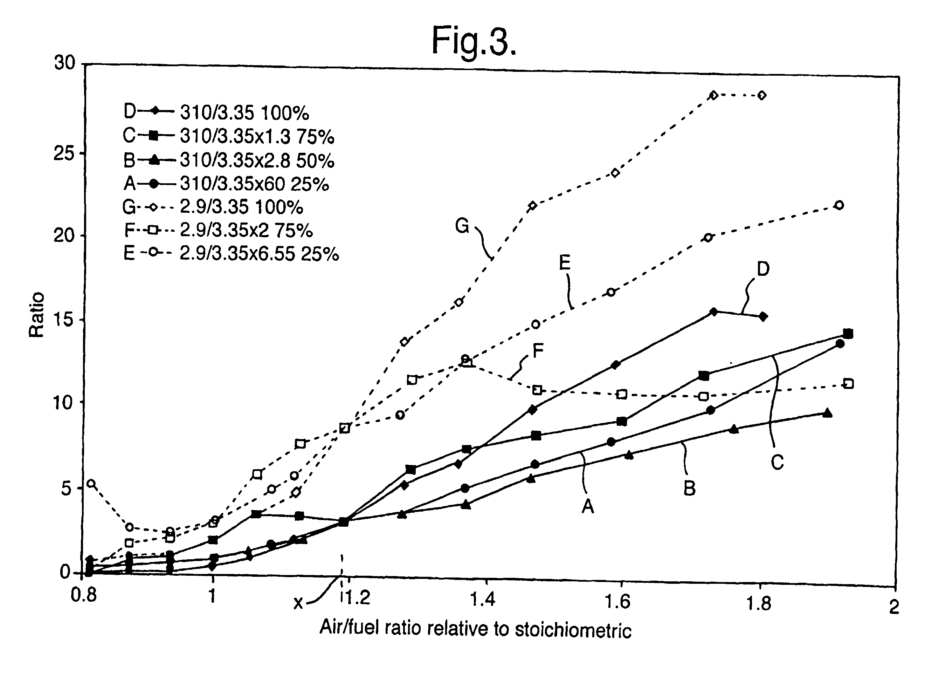

Figure 3 corresponds to Figure 2 (the axes are the same although the vertical axis is not to a logarithmic scale in Figure 3), but shows curves at a range of different furnace loads or fuel inputs. The four curves shown in full line (curves A, B, C and D) all show the ratio of the power in a particular frequency band in the detection signal from sensor 10 (at 310nm corresponding to the OH transient species) to the power in a particular frequency band in the detection signal from sensor 8 (at 3.35 µm, corresponding to the hot fuel in the flame), curves A, B, C and D corresponding respectively to furnace loads or fuel inputs of 25%, 50%, 75% and 100% of the maximum.

The dotted curves E, F, and G all show the ratio of the power in a particular frequency band in the detection signal from sensor 6 at 2.9 µm (the H₂O product) to the power in a particular frequency band in the detection signal from sensor 8 at 3.35 µm (the hot fuel in the flame) . Curves E, F and G correspond respectively to the ratios at furnace loads or fuel inputs of 25%,75% and 100% of the maximum.

In order to enable a comparison to be made between the different curves, the values corresponding to the 25%, 50% and 75% loads have been multiplied by arbitrary factors to make them equivalent to the ratio values at an air/fuel ratio of 3% excess oxygen above stoichiometric (indicated at X).

Figure 3 clearly shows that curves A, B, C and D (plotting the ratio of the signal due to the OH transient species output to the signal due to the hot fuel in the flame) have a much better consistency and a more systematic change with the air/fuel ratio at different furnace loads than curves E, F and G.

Accordingly, in one mode of operation, the apparatus of Figure 1 uses the digitised detection signals on lines 18, 19 and 20 from the sensors 6,8 and 10 to measure the two ratios discussed above: (i) the ratio of the power in a particular frequency band in the detection signal corresponding to the OH transient species at 310nm to the detection signal corresponding to the emission from the hot fuel in the flame at 3.35 µm, and (ii) the ratio of the power in a particular frequency band in the detection signal corresponding to the H₂O product at 2.9 µm to the power in a particular frequency band in the detection signal emission from the hot fuel in the flame at 3.35 µm. If the frequency passbands of the signal conditioning units 12, 14 and 16 are sufficiently narrow, the CPU 24 can determine these two ratios by measuring the mean amplitude in each detector signal and comparing them. Alternatively, if the frequency pass bands of the signal conditioning units are relatively wide, the CPU can perform a Fast Fourier Transform on the digitised data, to convert it into the frequency domain, and then integrate over the required frequency band and again take the ratios. The resultant ratio data is then compared with data stored in the memory 26 (thus, in effect, using data corresponding to that shown in Figures 2 and 3) to determine the combustion conditions. The resultant signal on line 28 is then used by the output unit 30 to adjust the air/fuel ratio by means of the valve 34 to produce a desired air/fuel ratio (normally, just above stoichiometric).

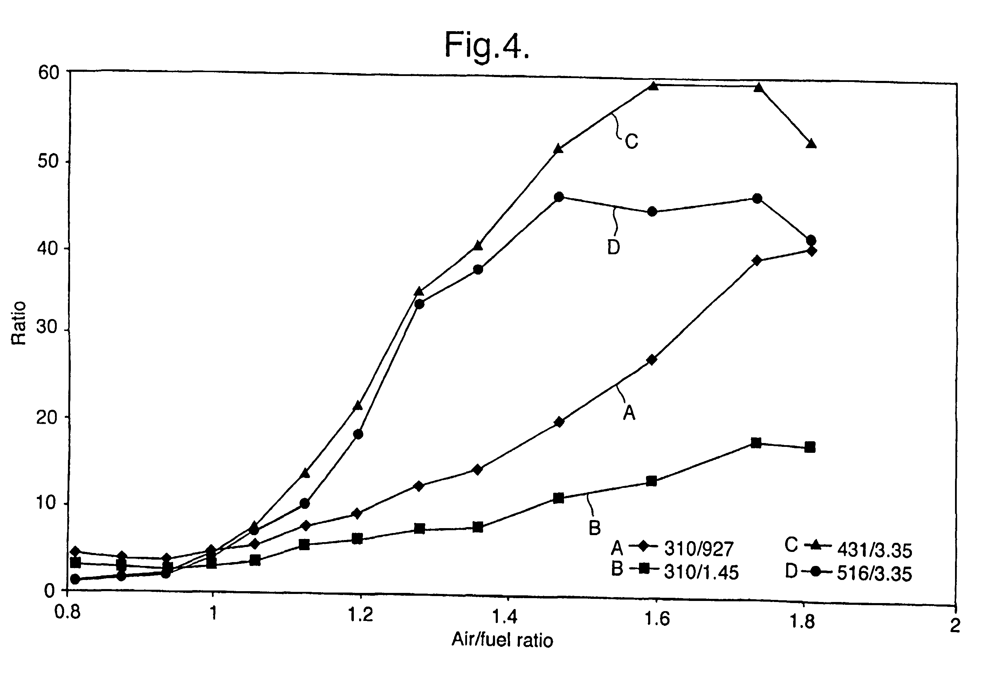

Figure 4 is generally similar to Figure 2 (except that the vertical scale is not logarithmic), but plots power ratios between outputs at different wavelengths. Thus curve A in Figure 4 shows the power ratio between the output at 310nm (the OH transient species) and the output at 927nm (corresponding to H₂O), plotted against the air/fuel ratio. Curve B shows the power ratio between the output at 310nm (the OH transient species) and the output at 1.45µm (again corresponding to H₂O), plotted against the air/fuel ratio. Curve C shows the power ratio between the output at 431nm (the CH transient species) and the output at 3.35nm (corresponding the hot fuel) plotted against the air/fuel ratio. Finally, curve D shows the power ratio between the output at 516nm (the C₂ transient species) and the output at 3.35nm (the hot fuel), plotted against the air/fuel ratio. The curves were all measured in a gas-fired furnace at full load. In each case, there is again shown a significant variation of the power ratio with the air/fuel ratio. Thus, Figure 4 shows that the sensors 6,8 and 10 (or one or two of them) can be modified to be sensitive to different radiation wavelengths so as to enable the CPU to measure one of the power ratios shown in Figure 4 and - thereby measure the air/fuel ratio in the flame.

Curves generally similar in shape to Curves A,B,C and D in Figure 4 will also be obtained if the non-transient species measured is H₂O at 2.9µm or is CO₂ at 4.5µm.

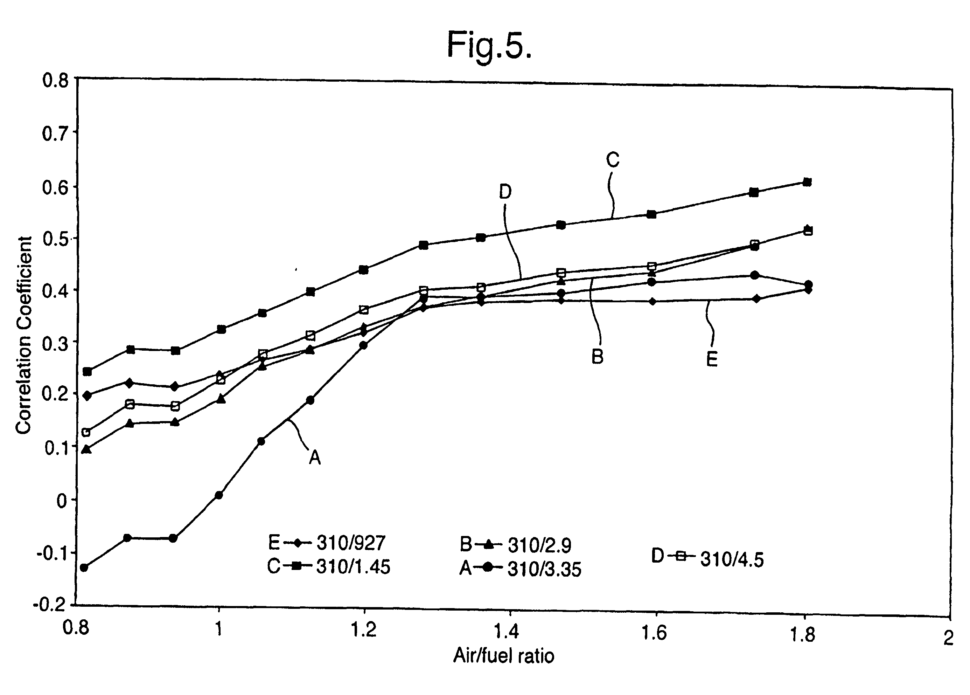

Figures 5,6,7 and 8 show another mode of processing the data derived from the sensors 6,8 and 10. In this mode, the detection signal data from the different detectors is correlated to derive the cross-correlation coefficient (vertical axis), and this is plotted against the air/fuel ratio relative to stoichiometric (horizontal axis).

Thus, curve A in Figure 5 shows how the cross-correlation coefficient between the detection signal at 310nm corresponding to the OH transient species (sensor 10), and the detection signal at 3.35 µm corresponding to the hot fuel in the flame (sensor 8) varies with the air/fuel ratio. Curve A shows that there is a significant variation which is substantially linear over the important region adjacent to the stoichiometric ratio.

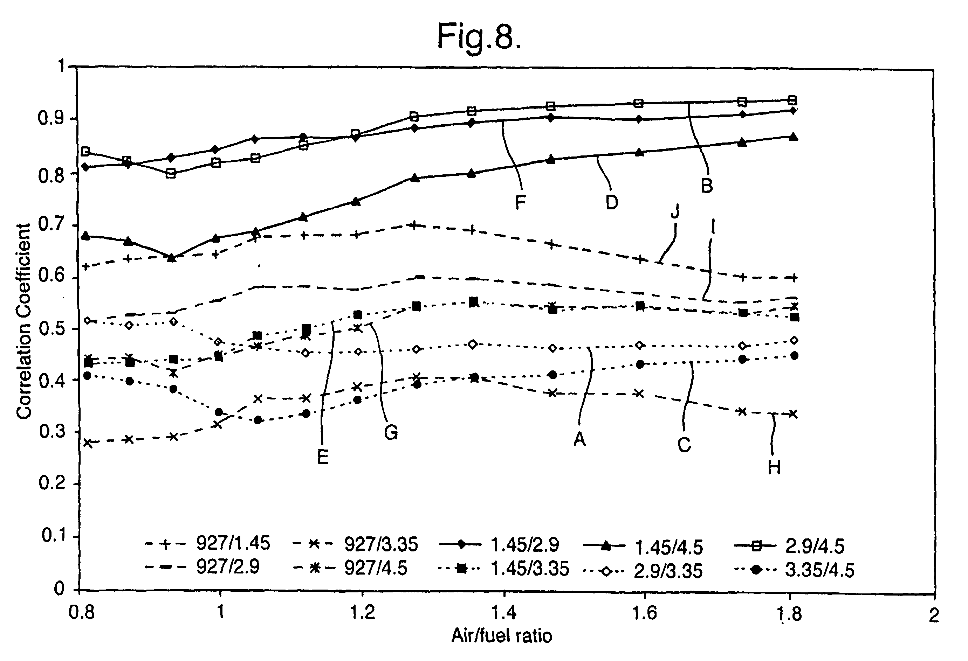

Curve A in Figure 8, in contrast, shows how the cross-correlation coefficient between the detection signal at 2.9 µm (sensor 6), corresponding to the H₂O combustion product, and the detection signal at 3.35µm, corresponding to the hot fuel in the flame (sensor 8), varies with the air/fuel ratio. The variation is small, and substantially less than the variation shown by curve A in Figure 5.

Therefore, in one form of the alternative mode of operation, the CPU 24 (Figure 1) performs the required correlation calculations (i) on the digital data received from the sensors 8 and 10 (corresponding to curve A in Figure 5) and (ii) on the digital data received from the sensors 6 and 8 (corresponding to curve A in Figure 5). The two correlation outputs can be compared with each other and also respectively compared with data stored in the memory 26 to determine the air/fuel ratio. Again, by means of the output unit 30 and the valve 34, the CPU can adjust the air/fuel ratio to bring it to the desired value.

Curve B in Figure 5shows how the cross-correlation coefficient between the detection signal at 310nm (the OH transient species, sensor 10) and the detection signal at 2.9µm (water, sensor 6) varies with the air/fuel ratio. Again, there is a significant variation (generally similar to though not as great as that of curve A in Figure 5). Therefore, the CPU 24 can produce correlation calculations on the digital data received from sensors 6 and 10 to supplement the correlation calculations specified above on the data received from the other two pairs of sensors.

In this second mode of operation, it is also not essential that the sensors 6, 8 and 10 be responsive to radiation in the three wavelengths specified above with reference to Figure 1. Thus, sensor 6 could instead be arranged to be responsive to emission corresponding to a product of combustion at a different wavelength from 2.9 µm; for example, H₂O at 927nm or at 1.45 µm, or CO₂ at 4.5 µm. Sensor 8 could be arranged to be responsive to emission from a product of combustion, instead of to emission from the hot fuel in the flame. Obviously, though, if it were responsive to the emission corresponding to a product of combustion, this would be at a different wavelength from the wavelength to which sensor 6 is responsive. Sensor 10 could be arranged to be responsive to radiation from some other transient species such as those mentioned earlier: CH at about 431 nm and C₂ at about 517nm, for example.

By way of example, curves C,D and E in Figure 5 show the correlation coefficient between the output at 310nm (in each case) on the one hand and the outputs at 1.45µm (H₂O combustion product), 4.5µm (CO₂ combustion product) and 927nm (H₂O combustion product) respectively on the other hand. Again, these curves all show significant variation with air/fuel ratio, though somewhat less than for curve A in Figure 5.

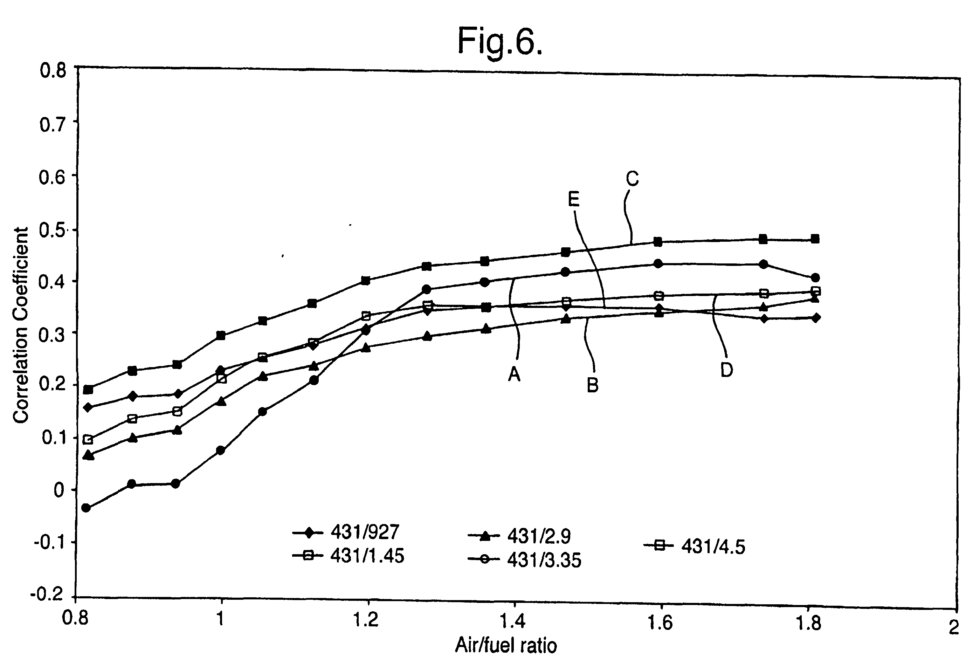

In Figure 6, the correlation coefficients between the outputs corresponding to the CH transient species at 431nm on the one hand and the outputs at five different non-transient species on the other hand are shown respectively in curves A,B,C,D and E. In curve A, the non-transient species is the hot fuel at 3.35µm, in curve B it is H₂O at 2.9µm, in curve C it is H₂O again but at 1.45µm, in curve D it is CO₂ at 4.5 µm, and in curve E it is H₂O again but at 927nm. Again, these curves all show significant variation with air/fuel ratio, though somewhat less than for curve A in Figure 5.

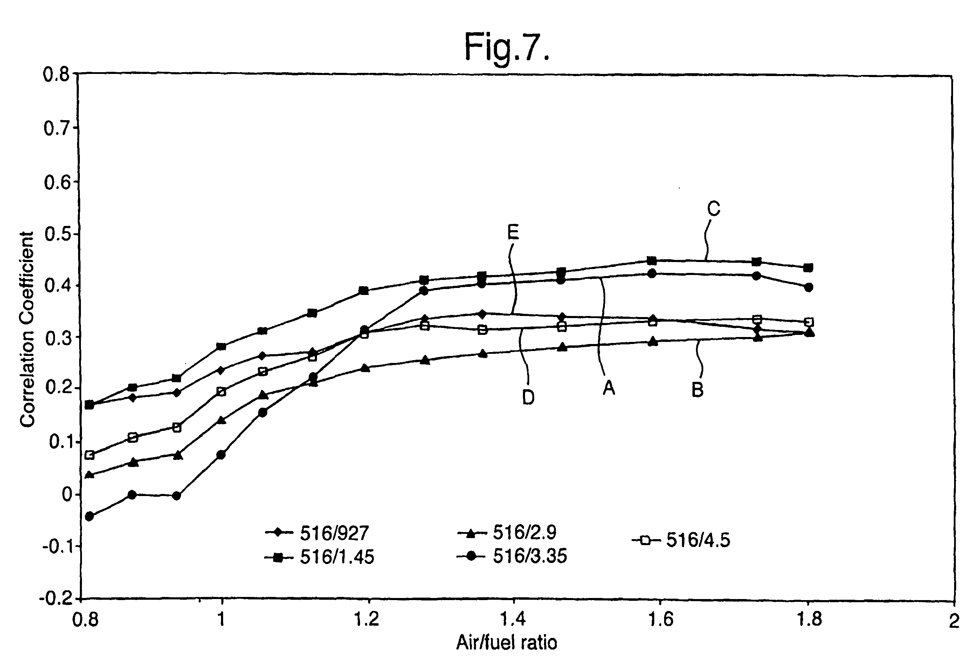

In Figure 7, the correlation coefficients between the outputs corresponding to the C₂ transient species at 516nm on the one hand and the outputs at five different non-transient species on the other hand are shown respectively in curves A,B,C,D and E. In curve A, the non-transient species is the hot fuel at 3.35µm, in curve B it is H₂O at 2.9µm, in curve C it is H₂O again but at 1.45µm, in curve D it is CO₂ at 4.5 µm, and in curve E it is H₂O again but at 927nm. Again, these curves all show significant variation with air/fuel ratio, though somewhat less than for curve A in Figure 5.

Referring again to Figure 8, curves B to J show the correlation coefficients between the outputs corresponding to different pairs of non-transient species as follows:-
(i) Curve B this shows the correlation coefficient between the output corresponding to H₂O at 2.9µm and the output corresponding to CO₂ at 4.5µm;
(ii) Curve C: this shows the correlation coefficient between the output corresponding to the hot fuel at 3.35µm and the output corresponding to CO₂ at 4.5µm;
(iii) Curves D,E and F: these show the correlation coefficients between, in each case, the output corresponding to H₂O at 1.45µm on the one hand and the outputs corresponding to CO₂ at 4.5µm (curve D), hot fuel at 3.35µm (curve E), and H₂O at 2.9µm (curve F) respectively on the other hand;
(iv) Curves G,H,I and J: these show the correlation coefficients between, in each case, the output corresponding to H₂O at 927nm on the one hand and the outputs corresponding to CO₂ at 4.5µm (curve G), the hot fuel at 3.35µm (curve H), H₂O at 2.9 µm (curve I), and H₂O at 1.45µm (curve J) respectively on the other hand.

Figure 8 shows that curves B to J are generally similar in shape to curve A in Figure 5: the variation of each correlation coefficient with the air/fuel ratio is small.

Thus, a comparison of the curves shown in Figures 5,6 and 7 on the one hand with the curves shown in Figure 8 on the other shows how the apparatus of Figure 1 could be modified by making the sensors 6,8 and 10 sensitive to radiation in the appropriate narrow wavelength bands.

The apparatus may be set up so as to operate simultaneously or sequentially in the two different modes (the first mode in which it takes the ratio of the outputs in a particular frequency band from each detector signal and the second mode in which it measures the correlation coefficients). The result will be to produce two or more estimates of the combustion conditions represented by the air/fuel ratio relative to stoichiometric. The CPU could then be arranged to make a weighted judgement between the estimates in order to control the output unit 30 and the valve unit 34. For example, a suitable artificial intelligence means could be used such as an expert system, by using fuzzy or conventional logical rules, or by means of an artificial neural network.

In all the embodiments disclosed, therefore, the emission of radiation in a narrow wavelength band corresponding to a transient species that exists only for a short time within the combustion region is compared with the emission in at least one narrow wavelength band corresponding to the hot hydrocarbon fuel in the flame or to a product of combustion to produce an output varying significantly with the air/fuel ratio. Advantageously, and as described, the emission of radiation in wavelength bands respectively corresponding to non-transient species such as different products of combustion or a product of combustion and the fuel, can be also compared to produce an output varying only slightly with the air/fuel ratio, in order to improve the discrimination process by contrasting the outputs respectively produced with and without the use of the emission due to the transient species. However, if desired the comparison involving the two non-transient species may be omitted.

If desired, two of the sensors could be responsive to radiation in wavelength bands corresponding to different transient species, with the third responsive to radiation in a wavelength band corresponding to a non-transient species. The emission corresponding to each of the transient species could then be compared with the emission corresponding to the non-transient species. Clearly, more than three sensors could be used to provide further sensitivity of discrimination with at least one being responsive to radiation in a wavelength corresponding to a transient species.

## Claims

1. Apparatus for monitoring a hydrocarbon flame, comprising first detecting means (10) responsive to electromagnetic radiation emitted by the flame in a first wavelength corresponding to a transient species existing for only a short time within the combustion region of the flame to produce a first detection signal, second detecting means (6 or 8) responsive to electromagnetic radiation emitted by the flame in a second wavelength corresponding to a non-transient species in the combustion region to produce a second detection signal, first comparing means (24) responsive to the first and second detection signals to produce a first comparison signal, and output means (30) for producing an output signal dependent on the air/fuel ratio in the flame, the apparatus being **characterised by** third detecting means (6 or 8) responsive to electromagnetic radiation emitted by the flame in a third wavelength which corresponds to a second non-transient species and is different from the wavelength corresponding to the first-mentioned non-transient species whereby to produce a third detection signal, and by second comparison means (24) responsive to the third detection signal and to one of the first and second detection signals to produce a second comparison signal, the output means (30) being operative to produce the output signal in dependence on the first and second comparison signals.

2. Apparatus according to claim 1, **characterised in that** the transient species is OH and the first wavelength is about 310nm.

3. Apparatus according to claim 1, **characterised in that** the transient species is CH and the first wavelength is about 431nm.

4. Apparatus according to claim 1, **characterised in that** the transient species is C₂ and the first wavelength is about 517nm.

5. Apparatus according to any preceding claim, **characterised in that** the non-transient species is selected from (a) the hot hydrocarbon fuel in the flame with the second wavelength being about 3.35 µm, (b) H₂O with the second wavelength being about 927nm, (c) H₂O with the second wavelength being about 1.45 µm, (d) H₂O with the second wavelength being about 2.9 nm, and (e) CO₂ with the second wavelength being about 4.5 µm.

6. Apparatus according to any preceding claim, **characterised in that** the second non-transient species is selected from (a) the hot hydrocarbon fuel in the flame with the third wavelength being about 3.35µm , (b) H₂O with the third wavelength being about 927nm, (c) H₂O with the third wavelength being about 1.45µm, (d) H₂O with the third wavelength being about 2.9µm, and (e) CO₂ with the third wavelength being about 4.5µm.

7. Apparatus according to any preceding claim, **characterised in that** the or each comparison means (24) detects the power values corresponding to each of the two detection signals compared in predetermined frequency bands, and compares the power values.

8. Apparatus according to claim 7, **characterised in that** the detecting means (6,8,10) include respective signal conditioning means (12,14,16) to produce the detection signals in the predetermined frequency bands, the signal conditioning means (12,14,16) comprising respective narrow band amplifiers, and the comparison means (24) comprising means responsive to the mean amplitude of each of the detection signals.

9. Apparatus according to claim 7, **characterised in that** the or each comparison means (24) comprises means for obtaining the Fast Fourier Transform of the respective detection signals as they vary with time and for integrating the Fast Fourier Transform over the predetermined frequency bands.

10. Apparatus according to any one of claims 1 to 6, **characterised in that** the or each comparison means (24) comprises correlating means for cross-correlating the two detection signals compared.

11. Apparatus according to any preceding claim, **characterised by** means (34) responsive to the output signal for adjusting the air/fuel ratio of the flame.

12. A method for monitoring a hydrocarbon flame, comprising the steps of detecting electromagnetic radiation emitted by the flame in a first wavelength corresponding to a transient species existing for only a short time within the combustion region of the flame to produce a first detection signal, detecting electromagnetic radiation emitted by the flame in a second wavelength corresponding to a non-transient species in the combustion region to produce a second detection signal, comparing the first and second detection signals to produce a first comparison signal, and producing an output signal dependent on the air/fuel ratio in the flame, the method being **characterised by** the steps of detecting electromagnetic radiation emitted by the flame in a third wavelength which corresponds to a second non-transient species and is different from the wavelength corresponding to the first-mentioned non-transient species whereby to produce a third detection signal, comparing the third detection signal with one of the first and second detection signals to produce a second comparison signal, and producing the output signal in dependence on the first and second comparison signals.

13. A method according to claim 12, **characterised by** the step of responding to the output signal by adjusting the air/fuel ratio of the flame.

## Patentansprüche

1. Vorrichtung zum Überwachen einer Kohlenwasserstoffflamme, wobei die Vorrichtung Folgendes aufweist:
eine erste Detektiereinrichtung (10), die auf elektromagnetische Strahlung anspricht, die von der Flamme mit einer ersten Wellenlänge abgegeben wird, die einer transienten Spezies entspricht, die nur für eine kurze Zeit innerhalb des Verbrennungsbereichs der Flamme existiert, um ein erstes Detektiersignal zu erzeugen, eine zweite Detektiereinrichtung (6 oder 8), die auf elektromagnetische Strahlung anspricht, die von der Flamme mit einer zweiten Wellenlänge abgegeben wird, die einer nicht-transienten Spezies in dem Verbrennungsbereich entspricht, um ein zweites Detektiersignal zu erzeugen, eine erste Vergleichseinrichtung (24), die auf das erste und das zweite Detektiersignal anspricht, um ein erstes Vergleichssignal zu erzeugen, und eine Ausgabeeinrichtung (30) zum Erzeugen eines Ausgangssignal in Abhängigkeit von dem Luft/Brennstoff-Verhältnis in der Flamme, wobei die Vorrichtung **gekennzeichnet ist durch** eine dritte Detektiereinrichtung (6 oder 8), die auf elektromagnetische Strahlung anspricht, die von der Flamme mit einer dritten Wellenlänge abgegeben wird, die einer zweiten nicht-transienten Spezies entspricht und von der Wellenlänge, die der erstgenannten nicht-transienten Spezies entspricht, verschieden ist, so dass ein drittes Detektiersignal erzeugt wird, und **durch** eine zweite Vergleichseinrichtung (24), die auf das dritte Detektiersignal und eines von dem ersten und dem zweiten Detektiersignal anspricht, um ein zweites Vergleichssignal zu erzeugen, wobei die Ausgabeeinrichtung (30) wirksam ist, um das Ausgangssignal in Abhängigkeit von dem ersten und dem zweiten Vergleichssignal zu erzeugen.

2. Vorrichtung nach Anspruch 1,
**dadurch gekennzeichnet, dass**
die transiente Spezies OH ist und die erste Wellenlänge ungefähr 310 nm ist.

3. Vorrichtung nach Anspruch 1,
**dadurch gekennzeichnet, dass**
die transiente Spezies CH ist und die erste Wellenlänge ungefähr 431 nm ist.

4. Vorrichtung nach Anspruch 1,
**dadurch gekennzeichnet, dass**
die transiente Spezies C₂ ist und die erste Wellenlänge ungefähr 517 nm ist.

5. Vorrichtung nach einem der vorhergehenden Ansprüche,
**dadurch gekennzeichnet, dass**
die nicht-transiente Spezies ausgewählt ist aus (a) dem heißen Kohlenwasserstoff-Brennstoff in der Flamme, wobei die zweite Wellenlänge ungefähr 3,35 µm ist, (b) H₂O, wobei die zweite Wellenlänge ungefähr 927 nm ist, (c) H₂O, wobei die zweite Wellenlänge ungefähr 1,45 µm ist, (d) H₂O, wobei die zweite Wellenlänge ungefähr 2,9 nm ist, und (e) CO₂, wobei die zweite Wellenlänge ungefähr 4,5 µm ist.

6. Vorrichtung nach einem der vorhergehenden Ansprüche,
**dadurch gekennzeichnet, dass**
die zweite nicht-transiente Spezies ausgewählt ist aus (a) dem heißen Kohlenwasserstoff-Brennstoff in der Flamme, wobei die dritte Wellenlänge ungefähr 3,35 µm ist, (b) H₂O, wobei die dritte Wellenlänge ungefähr 927 nm ist, (c) H₂O, wobei die dritte Wellenlänge ungefähr 1,45 µm ist, (d) H₂O, wobei die dritte Wellenlänge ungefähr 2,9 µm ist, und (e) CO₂, wobei die dritte Wellenlänge ungefähr 4,5 µm ist.

7. Vorrichtung nach einem der vorhergehenden Ansprüche,
**dadurch gekennzeichnet, dass**
die oder jede Vergleichseinrichtung (24) die Leistungswerte detektiert, die jedem von den zwei Detektiersignalen entsprechen, die in vorbestimmten Frequenzbändern verglichen wurden, und die Leistungswerte vergleicht.

8. Vorrichtung nach Anspruch 7,
**dadurch gekennzeichnet, dass**
die Detektiereinrichtungen (6, 8, 10) jeweilige Signalverarbereitungseinrichtungen (12, 14, 16) aufweisen, um die Detektiersignale in den vorbestimmten Frequenzbändern zu erzeugen, wobei die Signalverarbereitungseinrichtungen (12, 14, 16) jeweilige Schmalbandverstärker aufweisen, und wobei die Vergleichseinrichtungen (24) Mittel aufweisen, die auf die Mittelwert-Amplitude jedes von den Detektiersignalen ansprechen.

9. Vorrichtung nach Anspruch 7,
**dadurch gekennzeichnet, dass**
die oder jede Vergleichseinrichtung Mittel aufweist, um die schnelle Fouriertransformierte der jeweiligen Detektiersignale zu erhalten, die sich über die Zeit ändern, und um die schnelle Fouriertransformierte über die vorbestimmten Frequenzbänder zu integrieren.

10. Vorrichtung nach einem der Ansprüche 1 bis 6,
**dadurch gekennzeichnet, dass**
die oder jede Vergleichseinrichtung (24) eine Korreliereinrichtung zum Kreuzkorrelieren der zwei verglichenen Detektiersignale aufweist.

11. Vorrichtung nach einem der vorhergehenden Ansprüche,
**gekennzeichnet durch**
eine Einrichtung (34), die auf das Ausgangssignal anspricht, um das Luft/Brennstoff-Verhältnis der Flamme einzustellen.

12. Verfahren zum Überwachen einer Kohlenwasserstoffflamme, das die folgenden Schritte aufweist:
Detektieren von elektromagnetischer Strahlung, die von der Flamme mit einer ersten Wellenlänge abgegeben wird, die einer transienten Spezies entspricht, die nur für eine kurze Zeit innerhalb des Verbrennungsbereichs der Flamme existiert, um ein erstes Detektiersignal zu erzeugen, Detektieren von elektromagnetischer Strahlung, die von der Flamme mit einem zweiten Wellenlänge abgegeben wird, die einer nicht-transienten Spezies in dem Verbrennungsbereich entspricht, um ein zweites Detektiersignal zu erzeugen, Vergleichen des ersten und des zweiten Detektiersignals, um ein erstes Vergleichssignal zu erzeugen, und Erzeugen eines Ausgangssignals in Abhängigkeit von dem Luft/Brennstoff-Verhältnis in der Flamme, wobei das Verfahren durch die folgenden Schritte **gekennzeichnet ist:**
Detektieren von elektromagnetischer Strahlung, die von der Flamme mit einer dritten Wellenlänge abgegeben wird, die einer zweiten nicht-transienten Spezies entspricht und von der Wellenlänge, die der erstgenannten nicht-transienten Spezies entspricht, verschieden ist, so dass ein drittes Detektiersignal erzeugt wird, Vergleichen des dritten Detektiersignals mit einem von dem ersten und dem zweiten Detektiersignal, um ein zweites Vergleichssignal zu erzeugen, und Erzeugen des Ausgangssignals in Abhängigkeit von dem ersten und dem zweiten Vergleichssignal.

13. Verfahren nach Anspruch 12,
**gekennzeichnet durch**
den folgenden Schritt: Reagieren auf das Ausgangssignal **durch** Einstellen des Luft/Brennstoff-Verhältnisses der Flamme.

## Revendications

1. Appareil pour surveiller une flamme d'hydrocarbure, comprenant des premiers moyens de détection (10) sensibles à un rayonnement électromagnétique émis par la flamme dans une première longueur d'onde correspondant à une espèce transitoire n'existant que pendant un court moment à l'intérieur de la région de combustion de la flamme pour produire un premier signal de détection, des deuxièmes moyens de détection (6 ou 8) sensibles à un rayonnement électromagnétique émis par la flamme dans une deuxième longueur d'onde correspondant à une espèce non transitoire dans la région de combustion pour produire un deuxième signal de détection, des premiers moyens de comparaison (24) sensibles aux premier et deuxième signaux de détection pour produire un premier signal de comparaison, et des moyens de sortie (30) pour produire un signal de sortie dépendant du rapport air/combustible dans la flamme, l'appareil étant **caractérisé par** des troisièmes moyens de détection (6 ou 8) sensibles à un rayonnement électromagnétique émis par la flamme dans une troisième longueur d'onde qui correspond à une seconde espèce non transitoire et est différente de la longueur d'onde correspondant à l'espèce non transitoire mentionnée en premier moyennant quoi un troisième signal de détection est produit, et par des seconds moyens de comparaison (24) sensibles au troisième signal de détection et à un parmi les premier et deuxième signaux de détection pour produire un deuxième signal de détection, les moyens de sortie (30) étant fonctionnels pour produire le signal de sortie en fonction des premier et second signaux de comparaison.

2. Appareil selon la revendication 1, **caractérisé en ce que** l'espèce transitoire est OH et la première longueur d'onde est 310 nm environ.

3. Appareil selon la revendication 1, **caractérisé en ce que** l'espèce transitoire est CH et la première longueur d'onde est 431 nm environ.

4. Appareil selon la revendication 1, **caractérisé en ce que** l'espèce transitoire est C₂ et la première longueur d'onde est 517 nm environ.

5. Appareil selon l'une quelconque des revendications précédentes, **caractérisé en ce que** l'espèce non transitoire est sélectionnée à partir de (a) le combustible hydrocarboné chaud dans la flamme, la deuxième longueur d'onde étant 3,35 µm environ, (b) H₂O, la deuxième longueur d'onde étant 927 nm environ, (c) H₂O, la deuxième longueur d'onde étant 1,45 µm environ, (d) H₂O, la deuxième longueur d'onde étant 2,9 nm environ, et (e) CO₂, la deuxième longueur d'onde étant 4,5 µm environ.

6. Appareil selon l'une quelconque des revendications précédentes, **caractérisé en ce que** la seconde espèce non transitoire est sélectionnée parmi (a) le combustible hydrocarboné chaud dans la flamme, la troisième longueur d'onde étant 3,35 µm environ, (b) H₂O, la troisième longueur d'onde étant 927 nm environ, (c) H₂O, la troisième longueur d'onde étant 1,45 µm environ, (d) H₂O, la troisième longueur d'onde étant 2,9 µm environ, et (e) CO₂, la troisième longueur d'onde étant 4,5 µm environ.

7. Appareil selon l'une quelconque des revendications précédentes, **caractérisé en ce que** les ou chaque moyen de comparaison (24) détecte les valeurs de puissance correspondant à chacun des deux signaux de détection comparés dans des bandes de fréquence prédéterminées, et compare les valeurs de puissance.

8. Appareil selon la revendication 7, **caractérisé en ce que** les moyens de détection (6, 8, 10) comprennent des moyens de conditionnement de signaux respectifs (12, 14, 16) pour produire les signaux de détection dans les bandes de fréquence prédéterminées, les moyens de conditionnement de signaux (12, 14, 16) comprenant des amplificateurs de bandes étroites respectifs, et les moyens de comparaison (24) comprenant des moyens sensibles à l'amplitude moyenne de chacun des signaux de détection.

9. Appareil selon la revendication 7, **caractérisé en ce que** les ou chaque moyen de comparaison (24) comprend des moyens pour obtenir la transformation de Fourier rapide des signaux de détection respectifs au fur et à mesure qu'ils varient avec le temps et pour intégrer la transformation de Fourier rapide sur les bandes de fréquence prédéterminées.

10. Appareil selon l'une quelconque des revendications 1 à 6, **caractérisé en ce que** les ou chaque moyen de comparaison (24) comprend des moyens de corrélation pour intercorréler les deux signaux de détection comparés.

11. Appareil selon l'une quelconque des revendications précédentes, **caractérisé par** des moyens (34) sensibles au signal de sortie pour ajuster le rapport air/combustible de la flamme.

12. Procédé pour surveiller une flamme d'hydrocarbure, comprenant les étapes consistant à détecter un rayonnement électromagnétique émis par la flamme dans une première longueur d'onde correspondant à une espèce transitoire n'existant que pendant un court moment à l'intérieur de la région de combustion de la flamme pour produire un premier signal de détection, détecter un rayonnement électromagnétique émis par la flamme dans une deuxième longueur d'onde correspondant à une espèce non transitoire dans la région de combustion pour produire un deuxième signal de détection, comparer les premier et deuxième signaux de détection pour produire un premier signal de comparaison, et produire un signal de sortie dépendant du rapport air/combustible dans la flamme, le procédé étant **caractérisé par** les étapes consistant à détecter un rayonnement électromagnétique émis par la flamme dans une troisième longueur d'onde qui correspond à une seconde espèce non transitoire et est différente de la longueur d'onde correspondant à l'espèce non transitoire mentionnée en premier moyennant quoi un troisième signal de détection est produit, comparer le troisième signal de détection avec l'un des premier et deuxième signaux de détection pour produire un second signal de comparaison, et produire le signal de sortie en fonction des premier et second signaux de comparaison.

13. Procédé selon la revendication 12, **caractérisé par** l'étape consistant à répondre au signal de sortie en ajustant le rapport air/combustible de la flamme.
